# EUROPEAN PATENT APPLICATION

(11) **EP 2 919 064 A1**
(43) Date of publication of application: **16.09.2015**
(21) Application number: 14185494.3
(22) Date of filing: 19.09.2014
(51) Int. Cl.: G03B 5/00, G03B 17/56

(54) **Stabilizer for a photographing apparatus and a control method for such a stabilizer**

(30) Priority: 14.03.2014 CN 201410098752
(71) Applicant: Guangzhou HTEC Aviation Technology Co., Ltd., Guangzhou, Guangdong (CN)
(72) Inventor: Feng, Jian, GUANGZHOU Guangdong (CN); Jiao, Zhitao, CHENGDU Sichuan (CN); Lin, Jian, BEIJING Beijing (CN); Tsang, Tze Bun, GUANGZHOU Guangdong (CN); Jin, Edmund, Atherton, CA California 94027 (US)
(74) Representative: Manresa Val, Manuel

(57) **Abstract**

A stabilizer for a photographing apparatus comprising a first rotating shaft (4)driven by a first three-phase brushless AC motor (1), a second rotating shaft (5) driven by a second three-phase brushless AC motor (2), a first magnetic rotary encoder mounted on the first three-phase brushless AC motor, a second magnetic rotary encoder mounted on the second three-phase brushless AC motor, an inertial sensor, a fixing member (7), and a controller. The first and second three-phase brushless AC motors, the inertial sensor, and the first and second magnetic rotary encoders are electrically connected to the controller, respectively. The inertial sensor is mounted on the fixing member, the center axes of the first and second rotating shafts are perpendicular to each other, the fixing member is connected to the first rotating shaft and the first three-phase brushless AC motor is connected to the second rotating shaft by a bending member (8).

## Description

### FIELD

The present disclosure relates to a stabilizer for a photographing apparatus and a control method for such a stabilizer.

### BACKGROUND

With the development of photographic technology, a mobile phone with a photographing function or a professional digital photographing apparatus is very common in daily life, but it is easy to cause image shaking and blurring when photographing in motion, so photographing stabilizing equipment is needed in order to get a clear and stable image when photographing in motion.

There are four traditional stabilizing equipment systems as follows: (1) A mechanical stabilizer (can be referred to as "Steadicam stabilization system" in general) achieves the substantial stabilization of a photographing load by using a universal joint with low frictional resistance based on the inertial stabilization theory of mechanical barycenter, as recorded in CN 201220417128.4, CN 201230053857.1, and so on, but such a stabilizer controls the balance of the photographing load by a pendulum effect, which can play a role in stabilization in motion but lead to poor maneuverability, a limited space for application, a large inertial shaking after a sudden stop of a quick movement, and other disadvantages due to a fixed ratio between the photographing load and weights that the larger the load is, the larger the volume weight of the whole stabilizer is. Moreover, an adequate operational ability is necessary to fully master a Steadicam system. (2) A stabilizer mainly for aerial photography uses a micro sensor for feedback and achieves stabilization by a driving motor controlled by a microcomputer, as recorded in CN 201010171360.X, CN 201310097887.6, and so on, but such stabilizer uses an open-loop control mode in which an angular velocity sensor is used for feedback and uses a DC geared servo motor or an aeromodelling servo motor as a drive element such that the stability augmentation control cannot be realized smoothly and steady due to a clearance produced in a gearbox of a DC geared motor after positive and negative rotating, having the defects of low precision, low reliability, shaking easily, low life, and so on. (3) A high-performance stabilizer used in professional fields uses a high-performance angular velocity sensor for feedback and achieves stabilization by a driven torque motor controlled by a microcomputer, as recorded in CN 201110099579.8, but the motor used in such stabilizer is a hollow ring brush torque motor in which the housing, motor, and feedback component are heavy and very large, with large power consumption, so the stabilizer can only be used in professional fields and is not suitable for an ordinary consumer. (4) A stabilizing head used in aerial photography by a model plane uses an inertial sensor to detect attitude information of the load that can be processed by a microcomputer, and achieves stabilization by a motion of the load directly driven by a motor, as recorded in CN 201110380351.6, but the shortcoming of such a stabilizing head is that a brushless DC motor is used as a component for a direct drive that, on the one hand, the stabilizer does not apply to a stabilizing head rotating in a low speed and having a larger driving torque due to the length of its motor being larger than its diameter. On the other hand, the brushless DC motor will cause an abrupt change of the driving torque during commutation and the stabilization accuracy is affected, i.e., the stabilizing head uses a brushless DC motor as a driving device that changes the supply polarity of the armature to achieve electronic commutation upon the Hall signal but brings a larger torque fluctuation during commutation. As a result, it cannot meet the requirements of high performance, high precision, and high stability. Moreover, the stabilizing head uses attitude information as a feedback control quantity without any other auxiliary information for controlling and sampling, which has a considerable problem in control that will cause control delay and low control accuracy, and in the mechanical structure, the stabilizing head has many disadvantages such as loose structure, bad seismic performance, bad portability, low reliability, and limited rotation.

### SUMMARY

In view of the above, the present disclosure provides a stabilizer for a photographing apparatus with good stability, simple structure, and good portability, to overcome the defects of the prior art.

According to one aspect of the disclosure, a stabilizer for a photographing apparatus includes a first rotating shaft driven by a first three-phase brushless AC motor, a second rotating shaft driven by a second three-phase brushless AC motor, a first magnetic rotary encoder mounted on the first three-phase brushless AC motor, a second magnetic rotary encoder mounted on the second three-phase brushless AC motor, an inertial sensor, a fixing member, and a controller, wherein the first three-phase brushless AC motor, the second three-phase brushless AC motor, the inertial sensor, the first magnetic rotary encoder, and the second magnetic rotary encoder are electrically connected to the controller, respectively, the inertial sensor is mounted on the fixing member, the center axis of the first rotating shaft is perpendicular to the center axis of the second rotating shaft, the fixing member is connected to the first rotating shaft, and the first three-phase brushless AC motor is connected to the second rotating shaft by a bending member.

In various embodiments, the fixing member may include a supporting plate, a first clamping element, and a second clamping element, wherein each of opposite sides of the supporting plate is provided with an engaging mount, each of the first clamping element and the second clamping element is provided with an engaging shaft, the engaging shaft is hitched with a torsion spring, the first clamping element and the second clamping element can be rotatably mounted on the supporting plate by a cooperation between the engaging shaft and the engaging mount, and the supporting plate is connected to the first rotating shaft.

In various embodiments, a holding surface of each of the first clamping element and the second clamping element is an inward concave surface, and the holding surfaces of the first clamping element and the second clamping element are symmetrical.

In various embodiments, the fixing member includes a bearing plate, a connecting plate, and a positioning element, wherein the connecting plate includes a connection portion and a mounting portion perpendicular to the connection portion, the connection portion is connected to the first rotating shaft by a first leadscrew nut mechanism, the mounting portion is connected to the bearing plate by a second leadscrew nut mechanism, and the positioning element is provided on a side of the bearing plate.

In various embodiments, a display is provided at a side of the second three-phase brushless AC motor remote from the second rotating shaft, configured to be electrically connected to a photographing apparatus.

In various embodiments, each of the first magnetic rotary encoder and the second magnetic rotary encoder includes a circular magnetic steel sheet and an encoder chip, the circular magnetic steel is mounted on each of the first rotating shaft and the second rotating shaft, and the encoder chip is configured to face the circular magnetic steel sheet, be electrically connected to the controller, and be not abutted against its corresponding circular magnetic steel sheet.

In various embodiments, the stabilizer for a photographing apparatus also includes a universal handle, wherein the second three-phase brushless AC motor is connected to the universal handle, the controller is provided in the universal handle, the universal handle is provided with a power switch and a rotating shaft adjustment rod, and the power switch and the rotating shaft adjustment rod are electrically connected to the controller, respectively.

In various embodiments, the stabilizer for a photographing apparatus also includes a third rotating shaft driven by a third three-phase brushless AC motor, a connecting rod, an operating handle, a geomagnetic sensor, and a third magnetic rotary encoder, wherein the geomagnetic sensor and the third magnetic rotary encoder are electrically connected to the controller respectively, the geomagnetic sensor is mounted on the fixing member, the third magnetic rotary encoder is mounted on the third three-phase brushless AC motor, the third three-phase brushless AC motor is connected to the operating handle, the third rotating shaft is connected to the second three-phase brushless AC motor by the connecting rod, and the center axis of the third rotating shaft is perpendicular to the center axes of the first and second rotating shafts, respectively.

In various embodiments, the third magnetic rotary encoder includes a circular magnetic steel sheet and an encoder chip, wherein the circular magnetic steel is mounted on the first rotating shaft, the second rotating shaft, and the third rotating shaft, and the encoder chip is configured to face the circular magnetic steel sheet, be electrically connected to the controller, and be not abutted against its corresponding circular magnetic steel sheet.

In various embodiments, each of the first rotating shaft, the second rotating shaft, and the third rotating shaft is hollow with a collecting ring inside.

In various embodiments, each of the first three-phase brushless AC motor, the second three-phase brushless AC motor, and the third three-phase brushless AC motor is in a form of a flattened columned disc.

The present disclosure also provides a two-axis stabilizer for a photographing apparatus.

According to another aspect of the disclosure, a method for controlling a stabilizer for a photographing apparatus includes the following steps:
detecting an angular velocity and an accelerated velocity of each of three spatial axes in real time and transmitting them to the controller by the inertial sensor;
predicting a tendency of a motion of each of the first rotating shaft and the second rotating shaft based on data from the inertial sensor, and issuing a control command to each of the first three-phase brushless AC motor and the second three-phase brushless AC motor to adjust a position of each of the first rotating shaft and the second rotating shaft by the controller; and
detecting rotation information of each of the first three-phase brushless AC motor and the second three-phase brushless AC motor and transmitting the rotation information to the controller by the first magnetic rotary encoder and the second magnetic rotary encoder, respectively, calculating information of an absolute position of each of the first three-phase brushless AC motor and the second three-phase brushless AC motor based on the rotation information, by the controller, and correcting phase and amplitude of a control command issued based on the information of the absolute position of the motor.

The present disclosure further provides a three-axis stabilizer for a photographing apparatus.

According to a further aspect of the disclosure, a method for controlling a stabilizer for a photographing apparatus includes the following steps:
detecting an angular velocity and an accelerated velocity of each of three spatial axes in real time and transmitting them to the controller by the inertial sensor, and detecting a geomagnetic field intensity of each of three spatial axes and transmitting it to the controller by the geomagnetic sensor;
predicting a directional angle and a tendency of a motion of each of the first rotating shaft, the second rotating shaft, and the third rotating shaft based on data from the inertial sensor and the geomagnetic sensor, and issuing a control command to each of the first three-phase brushless AC motor, the second three-phase brushless AC motor, and the third three-phase brushless AC motor by the controller, and adjusting a position of each of the first rotating shaft, the second rotating shaft, and the third rotating shaft based on the control command by the first three-phase brushless AC motor, the second three-phase brushless AC motor and the third three-phase brushless AC motor, respectively; and
detecting rotation information of each of the first three-phase brushless AC motor, the second three-phase brushless AC motor, and the third three-phase brushless AC motor and transmitting the rotation information to the controller by the first magnetic rotary encoder, the second magnetic rotary encoder, and the third magnetic rotary encoder, respectively, calculating information of an absolute position of each of the first three-phase brushless AC motor, the second three-phase brushless AC motor, and the third three-phase brushless AC motor based on the rotation information, by the controller, and correcting phase and amplitude of a control command issued based on the information of the absolute position of the motor.

Further, predicting a directional angle and a tendency of a motion of each of the first rotating shaft, the second rotating shaft, and the third rotating shaft based on data from the inertial sensor and the geomagnetic sensor, and issuing a control command to each of the first three-phase brushless AC motor, the second three-phase brushless AC motor, and the third three-phase brushless AC motor by the controller may include the following steps:
reading data of the inertial sensor and the geomagnetic sensor in real time and calculating a current attitude of each of the first rotating shaft, the second rotating shaft, and the third rotating shaft by the controller;
calculating control increments by using the angular velocities of three spatial axes as feedback quantity and using the calculated current attitude angles of the first rotating shaft, the second rotating shaft, and the third rotating shaft as compensations by the controller; and
adding the control increments to driving targets of the first three-phase brushless AC motor, the second three-phase brushless AC motor, and the third three-phase brushless AC motor, and distributing a pulse-width modulatable continuous pulse at a duty ratio corresponding to a three-phase sine wave to each of the first three-phase brushless AC motor, the second three-phase brushless AC motor, and the third three-phase brushless AC motor based on the driving targets by the controller.

In various embodiments, the continuous pulse operates at frequencies between 16 KHz/s and 22 KHz/s.

Further, detecting rotation information of each of the first three-phase brushless AC motor, the second three-phase brushless AC motor, and the third three-phase brushless AC motor, and transmitting the rotation information to the controller by the first magnetic rotary encoder, the second magnetic rotary encoder, and the third magnetic rotary encoder, respectively, may include the following step:
forming a rotating magnetic field by a rotation of each of the circular magnetic steel sheets with the first three-phase brushless AC motor, the second three-phase brushless AC motor, and the third three-phase brushless AC motor, respectively, detecting the rotating magnetic field and outputting two orthogonal sine wave signals to the controller by the encoder chips, and calculating information an absolute position of each of the first three-phase brushless AC motor, the second three-phase brushless AC motor, and the third three-phase brushless AC motor based on data from the encoder chips by the controller.

In various embodiments, in the above steps, the controller may collect data from the inertial sensor and the magnetic rotary encoders at frequencies between 1,300/s and 1,600/s.

In various embodiments, the principles and advantages of the above solutions are described as follows.
1. The above stabilizer for a photographing apparatus configures the center axes of the first and second rotating shafts to perpendicularly intersect, configures the fixing member to be connected to the first rotating shaft, and configures the first three-phase brushless AC motor to be connected to the second rotating shaft by the bending member, to mount the photographing apparatus on the fixing member. When photographing, the inertial sensor detects the angular velocity and the accelerated velocity of each of three spatial axes in real time, the first magnetic rotary encoder and the second magnetic rotary encoder acquire the data of the rotation positions of the first three-phase brushless AC motor and the second three-phase brushless AC motor, and the high-performance controller collects data, calculates attitudes and positions, and outputs the three-phase AC sine wave to each of the first rotating shaft driven by the first three-phase brushless AC motor and the second rotating shaft driven by the second three-phase brushless AC motor for motion compensation for the photographing apparatus, to keep the photographing apparatus stable. The stabilizer for a photographing apparatus is simple in structure, compact, lightweight, and easy to carry, and can be applied for different movements, such as walking and riding, or for different loads, such as hand, car, boat, and aircraft. The photographing apparatus can be selected from the group consisting of a photographing apparatus of a smart phone, a micro camera, a card camera, an interchangeable lens digital camera, a single-lens reflex camera, a professional digital camera, a professional digital video camera, a professional film video camera, and so on.
2. The above method for controlling a two-axis stabilizer for a photographing apparatus has two control loops, one in which the controller predicts the tendency of the motion of each of the first rotating shaft and the second rotating shaft based on data from the inertial sensor and issues the control command to each of the first three-phase brushless AC motor and the second three-phase brushless AC motor to adjust the position of each of the first rotating shaft and the second rotating shaft, and the other in which the first magnetic rotary encoder and the second magnetic rotary encoder detect the rotation information of the first three-phase brushless AC motor and the second three-phase brushless AC motor and transmit the rotation information to the controller, respectively, the controller calculates the information of the absolute position of each of the first three-phase brushless AC motor and the second three-phase brushless AC motor based on the rotation information, and corrects phase and amplitude of a control command issued based on the information of the absolute position of the motor, so as to keep the photographing apparatus mounted on the two-axis stabilizer stable, and to have clear and smooth continuous images, without shaking.
3. The above method for controlling a three-axis stabilizer for a photographing apparatus also has two control loops, one in which the controller predicts the directional angle and the tendency of the motion of each of the first rotating shaft, the second rotating shaft, and the third rotating shaft based on data from the inertial sensor and the geomagnetic sensor, and issues the control command to each of the first three-phase brushless AC motor, the second three-phase brushless AC motor, and the third three-phase brushless AC motor to adjust the position of each of the first rotating shaft, the second rotating shaft, and the third rotating shaft, and the other in which the first magnetic rotary encoder, the second magnetic rotary encoder, and the third magnetic rotary encoder detect the rotation information of the first three-phase brushless AC motor, the second three-phase brushless AC motor, and the third three-phase brushless AC motor, and transmit the rotation information to the controller, respectively, the controller calculates the information of the absolute position of each of the first three-phase brushless AC motor, the second three-phase brushless AC motor, and the third three-phase brushless AC motor based on the rotation information, and corrects phase and amplitude of a control command issued based on the information of the absolute position of the motor, so as to keep the photographing apparatus mounted on the two-axis stabilizer stable, and to have clear and smooth continuous images, without shaking.

### DESCRIPTION OF THE DRAWINGS

The accompanying drawings, which are incorporated into and constitute a part of this specification, illustrate one or more examples of embodiments and, together with the description of example embodiments, serve to explain the principles and implementations of the embodiments. In the drawings:
FIGURE 1 is a schematic diagram illustrating a two-axis stabilizer for a photographing apparatus according to Example One of the present disclosure;
FIGURE 2 is a schematic diagram illustrating a two-axis stabilizer for a photographing apparatus according to Example Two of the present disclosure;
FIGURE 3 is a schematic diagram illustrating a two-axis stabilizer for a photographing apparatus according to Example Three of the present disclosure;
FIGURE 4 is a schematic diagram illustrating a three-axis stabilizer for a photographing apparatus according to Example Four of the present disclosure;
FIGURE 5 is a schematic diagram illustrating a three-axis stabilizer for a photographing apparatus according to Example Five of the present disclosure;
FIGURE 6 is a flow diagram illustrating a method for controlling a two-axis stabilizer for a photographing apparatus according to Example Six of the present disclosure;
FIGURE 7 is a flow diagram illustrating a method for controlling a three-axis stabilizer for a photographing apparatus according to Example Seven of the present disclosure; and
FIGURE 8 is a schematic diagram illustrating a method for controlling a three-axis stabilizer for a photographing apparatus according to Example Seven of the present disclosure.

### Description of the reference signs:

1: first three-phase brushless AC motor;
2: second three-phase brushless AC motor;
3: third three-phase brushless AC motor;
4: first rotating shaft;
5: second rotating shaft;
6: third rotating shaft;
7: fixing member;
711: supporting plate;
712: first clamping element;
713: second clamping element;
721: bearing plate;
722: connecting plate;
723: positioning element;
8: bending member;
9: universal handle;
10: display;
11: connecting rod; and
12: operating handle.

### DETAILED DESCRIPTION

In the following description of embodiments, reference is made to the accompanying drawings that form a part hereof, and in which it is shown by way of illustration example embodiments of the disclosure that can be practiced. It is to be understood that other embodiments can be used and structural changes can be made without departing from the scope of the disclosed embodiments.

### Example One

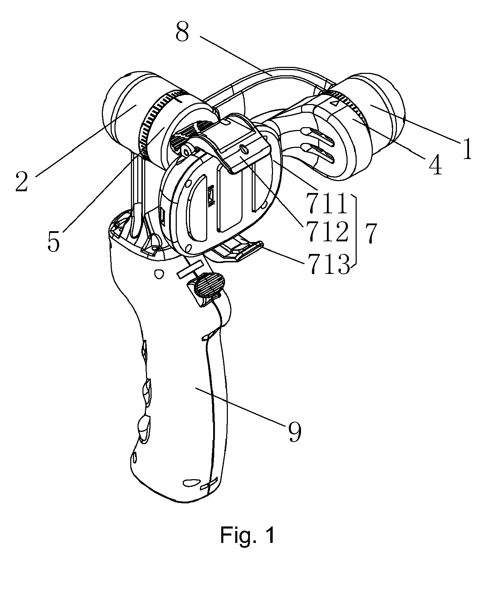

As shown in FIGURE 1, a stabilizer for photographing apparatus includes a first rotating shaft 4 driven by a first three-phase brushless AC motor 1, a second rotating shaft 5 driven by a second three-phase brushless AC motor 2, a first magnetic rotary encoder mounted on the first three-phase brushless AC motor 1, a second magnetic rotary encoder mounted on the second three-phase brushless AC motor 2, an inertial sensor, a fixing member 7 and a controller, wherein the first three-phase brushless AC motor 1, the second three-phase brushless AC motor 2, the inertial sensor, the first magnetic rotary encoder, and the second magnetic rotary encoder are electrically connected to the controller, respectively, the inertial sensor is mounted on the fixing member 7, the center axes of the first rotating shaft 4 and the second rotating shaft 5 perpendicularly intersect, the fixing member 7 is connected to the first rotating shaft 4, and the first three-phase brushless AC motor 1 is connected to the second rotating shaft 5 by a bending member 8.

The above stabilizer for photographing apparatus configures the center axes of the first rotating shaft 4 and the second rotating shaft 5 to perpendicularly intersect, configures the fixing member 7 to be connected to the first rotating shaft 4, and configures the first three-phase brushless AC motor 1 to be connected to the second rotating shaft 5 by the bending member 8, to mount the photographing apparatus on the fixing member 7. When photographing, the inertial sensor detects the angular velocity and the accelerated velocity of each of three spatial axes (X, Y, Z three spatial axes with the origin at the inertial sensor) in real time, and the controller issues a control command to each of the first three-phase brushless AC motor and the second three-phase brushless AC motor to adjust a position of each of the first rotating shaft and the second rotating shaft, in which the control command is a three-phase AC sine wave. The first magnetic rotary encoder and the second magnetic rotary encoder acquire the data of the rotation positions of the first three-phase brushless AC motor 1 and the second three-phase brushless AC motor 2, and the high performance controller collects data, calculates attitudes and positions, and corrects the phase and amplitude of the output three-phase AC sine wave based on the information of the absolute position of the motor, to keep the photographing apparatus stable. The stabilizer for a photographing apparatus is simple in structure, compact, lightweight, and easy to carry, and can be applied for different movements, such as walking and riding, or for different loads, such as hand, car, boat, and aircraft. The photographing apparatus can be selected from the group consisting of a photographing apparatus of a smart phone, a micro camera, a card camera, an interchangeable lens digital camera, a single-lens reflex camera, a professional digital camera, a professional digital video camera, a professional film video camera, and so on. The information of the absolute position includes the mechanical angle of the motor, the electrical angle of the motor, the phase of the magnetic field and so on. The first magnetic rotary encoder and the second magnetic rotary encoder are provided to avoid an abnormal torque and shaking caused by lack of a motor angle feedback loop, to improve the reliability and the stability of the stabilizer, and to make the stabilizer automatically adjust the drive current of the motor with the magnitude of the external disturbance that, when the external disturbance is small, the power consumption is low, and when the external disturbance is large, the torque can be improved immediately, so as to achieve low power consumption and high stability. Moreover, the first three-phase brushless AC motor 1 and the second three-phase brushless AC motor 2 can operate in a position server mode to provide more human operations for users, for example, an angle of a certain rotating shaft may be locked so that the rotating shaft can move with a movement outside.

In accordance with an embodiment, the fixing member 7 includes a supporting plate 711, a first clamping element 712, and a second clamping element713. Each of opposite sides of the supporting plate 711 is provided with an engaging mount, and each of the first clamping element 712 and the second clamping element 713 is provided with an engaging shaft. The engaging shaft is hitched with a torsion spring, and the first clamping element 712 and the second clamping element 713 can be rotatably mounted on the supporting plate 711 by a cooperation between the engaging shaft and the engaging mount, and the supporting plate 711 is connected to the first rotating shaft 4. The photographing apparatus can keep a relatively fixed position to the supporting plate 711 by the cooperation between the first clamping element 712 and the second clamping element713, and the distance between the first clamping element 712 and the second clamping element 713 can be adjusted dependent on the sizes of different photographing apparatus with the action of the torsion spring, the engaging shaft, and the engaging mount, to make the fixing member 7 applicable for photographing apparatus of different sizes.

A holding surface of each of the first clamping element 712 and the second clamping element 713 is an inward concave surface, and the holding surfaces of the first clamping element 712 and the second clamping element 713 are symmetrical. The photographing apparatus can be fixed to the supporting plate 711 at different desired angles with the action of the holding surface of each of the first clamping element 712 and the second clamping element 713, and can keep stable at different angles and not be readily slid from the fixing member 7.

Each of the first magnetic rotary encoder and the second magnetic rotary encoder includes a circular magnetic steel sheet and an encoder chip, the circular magnetic steel is mounted on the back end of each of the first rotating shaft 4 and the second rotating shaft 5, and the encoder chip is configured to face the circular magnetic steel sheet, be electrically connected to the controller, and be not abutted against its corresponding circular magnetic steel sheet. The circular magnetic steel sheets rotate with the rotating shafts to form a rotating magnetic field, the encoder chips detect the rotating magnetic field and output two orthogonal sine wave signals to the controller, and the controller calculates the information of the absolute position of each of the first three-phase brushless AC motor 1 and the second three-phase brushless AC motor 2 based on data from the encoder chips for correcting the phase and amplitude of the output three-phase AC sine wave, to prevent a drive phase over-limit, a torque inversion or shaking from occurring in the first three-phase brushless AC motor 1 and the second three-phase brushless AC motor 2 to improve the control accuracy and the anti-interference ability of the first three-phase brushless AC motor 1 and the second three-phase brushless AC motor 2, and to optimize the balance of the holding torque and the power consumption. Moreover, the movement data of the first three-phase brushless AC motor 1 or the second three-phase brushless AC motor 2 acquired by the first magnetic rotary encoder or the second magnetic rotary encoder can be used alone as a feedback quantity to achieve the function of angle locking of the first three-phase brushless AC motor 1 or the second three-phase brushless AC motor 2. The circular magnetic steel sheet is in a mode of magnetization that a circular area is divided into N and S poles, and the encoder chip is a sensor based on TMR principle.

The stabilizer for a photographing apparatus also includes a universal handle 9. The second three-phase brushless AC motor 2 is connected to the universal handle 9, and the controller is provided in the universal handle 9. The universal handle 9 is provided with a power switch and a rotating shaft adjustment rod, and the power switch and the rotating shaft adjustment rod are electrically connected to the controller, respectively. The power switch on the universal handle 9 is turned on and the rotating shaft adjustment rod is adjusted to control the first rotating shaft 4 and the second rotating shaft 5 to rotate so that the photographing apparatus mounted on the fixing member 7 will be placed in the best photographing angle, which is an initial position of the photographing apparatus placed on the stabilizer. The photographing apparatus on the fixing member 7 can be kept in its initial position by moving the universal handle 9 and each of the first rotating shaft 4 driven by the first three-phase brushless AC motor 1 and the second rotating shaft 5 driven by the second three-phase brushless AC motor 2 controlled by the controller.

### Example Two

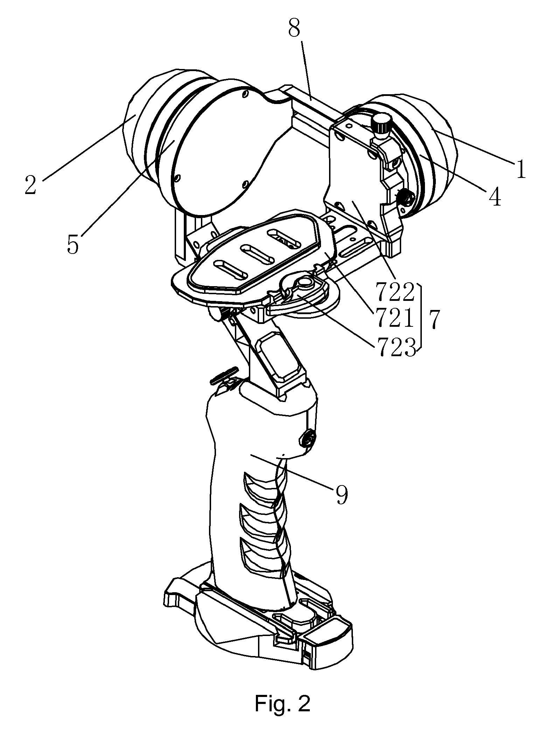

As shown in FIGURE 2, the example is different from Example One in that the fixing member 7 includes a bearing plate 721, a connecting plate 722, and a positioning element 723. The connecting plate 722 includes a connection portion and a mounting portion perpendicular to the connection portion. The connection portion is connected to the first rotating shaft 4 by a first leadscrew nut mechanism, the mounting portion is connected to the bearing plate 721 by a second leadscrew nut mechanism, and the positioning element 723 is provided on a side of the bearing plate 721.

The photographing apparatus is mounted on the bearing plate 721 by providing the fixing member including the bearing plate 721, the connecting plate 722, and the positioning element 723. The photographing apparatus is fixed to the bearing plate 721 by the positioning element 723 provided on the side of the bearing plate 721, and the position of the bearing plate 721 can be adjusted by the first leadscrew nut mechanism and the second leadscrew nut mechanism to adjust the gravity of the photographing apparatus mounted on the bearing plate 721, so as to overlap the gravity of the photographing apparatus and the intersection of the center axes of the first rotating shaft 4 and the second rotating shaft 5, thus further improving the stability of the stabilizer.

### Example Three

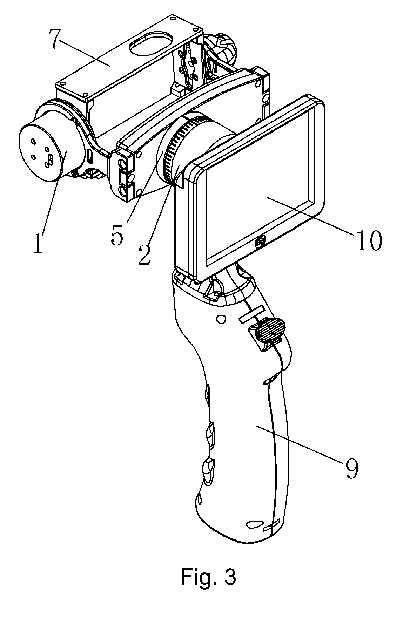

As shown in FIGURE 3, the example is different from Example One in that a display 10 configured to be electrically connected to the photographing apparatus is provided at a side of the second three-phase brushless AC motor 2 remote from the second rotating shaft 5.

The user can watch pictures during photographing conveniently by the display 10 provided at a side of the second three-phase brushless AC motor 2 remote from the second rotating shaft 5, and configured to be electrically connected to the photographing apparatus.

### Example Four

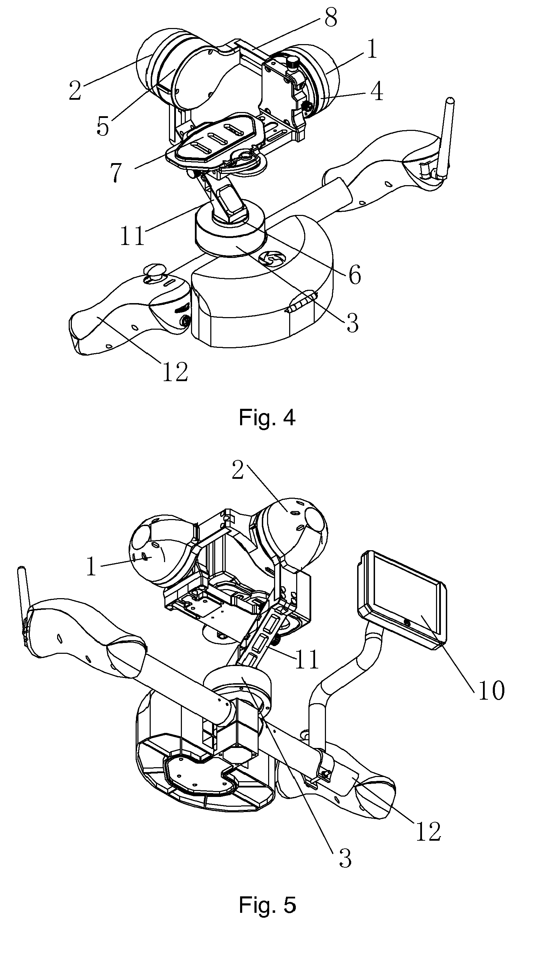

As shown in FIGURE 4, the example is different from Example One in that the stabilizer for a photographing apparatus is not provided with a universal handle 9, but is provided with a third rotating shaft 6 driven by a third three-phase brushless AC motor 3, a connecting rod 11, an operating handle 12, a geomagnetic sensor, and a third magnetic rotary encoder. The geomagnetic sensor and the third magnetic rotary encoder are electrically connected to the controller, respectively, the geomagnetic sensor is mounted on the fixing member 7, and the third magnetic rotary encoder is mounted on the third three-phase brushless AC motor 3. The third three-phase brushless AC motor 3 is connected to the operating handle 12, the third rotating shaft 6 is connected to the second three-phase brushless AC motor 2 by the connecting rod 11, and the center axis of the third rotating shaft 6 perpendicularly intersects to the center axes of the first rotating shaft 4 and the second rotating shaft 5, respectively.

The third rotating shaft 6 and the geomagnetic sensor are provided to control the direction of the photographing apparatus, where the geomagnetic sensor detects the geomagnetic field intensity of each of three spatial axes (X, Y, Z three spatial axes with the origin at the geomagnetic sensor) and transmits the detected geomagnetic field intensity to the controller. The controller predicts a directional angle and a tendency of a motion of each of the first rotating shaft 4, the second rotating shaft 5, and the third rotating shaft 6 based on data from the inertial sensor and the geomagnetic sensor, and issues a control command to each of the first three-phase brushless AC motor 1, the second three-phase brushless AC motor 2, and the third three-phase brushless AC motor 3, and the first three-phase brushless AC motor 1, the second three-phase brushless AC motor 2, and the third three-phase brushless AC motor 3 adjust the positions of the first rotating shaft 4, the second rotating shaft 5, and the third rotating shaft 6 based on the control command, respectively. In the embodiment, the first rotating shaft 4 is a pitching shaft, the second rotating shaft 5 is a rolling shaft, and the third rotating shaft 6 is a direction shaft.

The third magnetic rotary encoder includes a circular magnetic steel sheet and an encoder chip, the circular magnetic steel sheet is mounted on the first rotating shaft 4, the second rotating shaft 5, and the third rotating shaft 6, and the encoder chip is configured to face the circular magnetic steel sheet, be electrically connected to the controller, and be not abutted against its corresponding circular magnetic steel sheet.

Each of the first rotating shaft 4, the second rotating shaft 5, and the third rotating shaft 6 is hollow with a collecting ring inside. The first rotating shaft 4, the second rotating shaft 5, and the third rotating shaft 6 are hollow to make a power line, a control line, or the like, easier to pass through, and each of the rotating shafts is provided with the collecting ring to not make the power line and the control line of the stabilizer wrapped after a multi-turn rotational movement.

Each of the first three-phase brushless AC motor 1, the second three-phase brushless AC motor 2, and the third three-phase brushless AC motor 3 is in a form of a flattened columned disc. In this way, the kind of motor applies to output a large torque at slow speeds, different from the traditional long cylindrical brushless motor that applies for high-speed rotation.

### Example Five

As shown in FIGURE 5, the example is different from Example Four in that the operating handle 12 is provided with a display 10 configured to be electrically connected to the photographing apparatus.

### Example Six

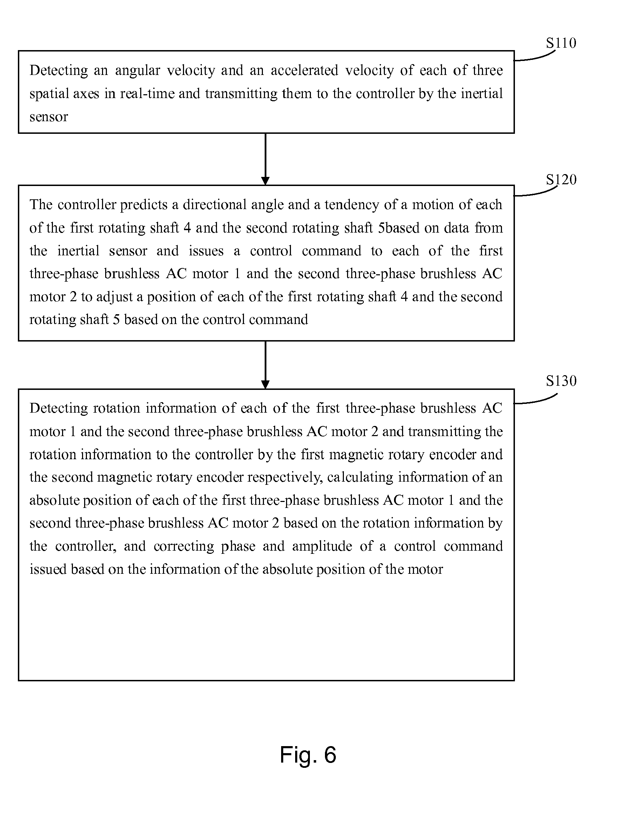

As shown in FIGURE 6, a method for controlling a stabilizer for a photographing apparatus includes the following steps:
S110, detecting an angular velocity and an accelerated velocity of each of three spatial axes in real time and transmitting them to the controller by the inertial sensor;
S120, predicting a tendency of a motion of each of the first rotating shaft 4 and the second rotating shaft 5 based on data from the inertial sensor, and issuing a control command to each of the first three-phase brushless AC motor 1 and the second three-phase brushless AC motor 2 to adjust a position of each of the first rotating shaft 4 and the second rotating shaft 5 by the controller; and
S130, detecting rotation information of each of the first three-phase brushless AC motor 1 and the second three-phase brushless AC motor 2 and transmitting the rotation information to the controller by the first magnetic rotary encoder and the second magnetic rotary encoder, respectively, calculating information of an absolute position of each of the first three-phase brushless AC motor 1 and the second three-phase brushless AC motor 2 based on the rotation information, by the controller, and correcting phase and amplitude of a control command issued based on the information of the absolute position of the motor. The information of the absolute position includes the mechanical angle of the motor, the electrical angle of the motor, the phase of the magnetic field, and so on. The control command is a three-phase AC sine wave.

In the embodiment, the method for controlling the two-axis stabilizer for a photographing apparatus as described in Example One, Two or Three, has two control loops, one in which the controller predicts the tendency of the motion of each of the first rotating shaft 4 and the second rotating shaft 5 based on data from the inertial sensor and issues the control command to each of the first three-phase brushless AC motor 1 and the second three-phase brushless AC motor 2 to adjust the position of each of the first rotating shaft 4 and the second rotating shaft 5, and the other in which the first magnetic rotary encoder and the second magnetic rotary encoder detect the rotation information of the first three-phase brushless AC motor 1 and the second three-phase brushless AC motor 2 and transmitting the rotation information to the controller, respectively, the controller calculates the information of the absolute position of each of the first three-phase brushless AC motor 1 and the second three-phase brushless AC motor 2 based on the rotation information, and corrects the phase and amplitude of the three-phase AC sine wave based on the information of the absolute position of the motor, so as to keep the photographing apparatus mounted on the two-axis stabilizer stable, and to have clear and smooth continuous images, without shaking.

### Example Seven

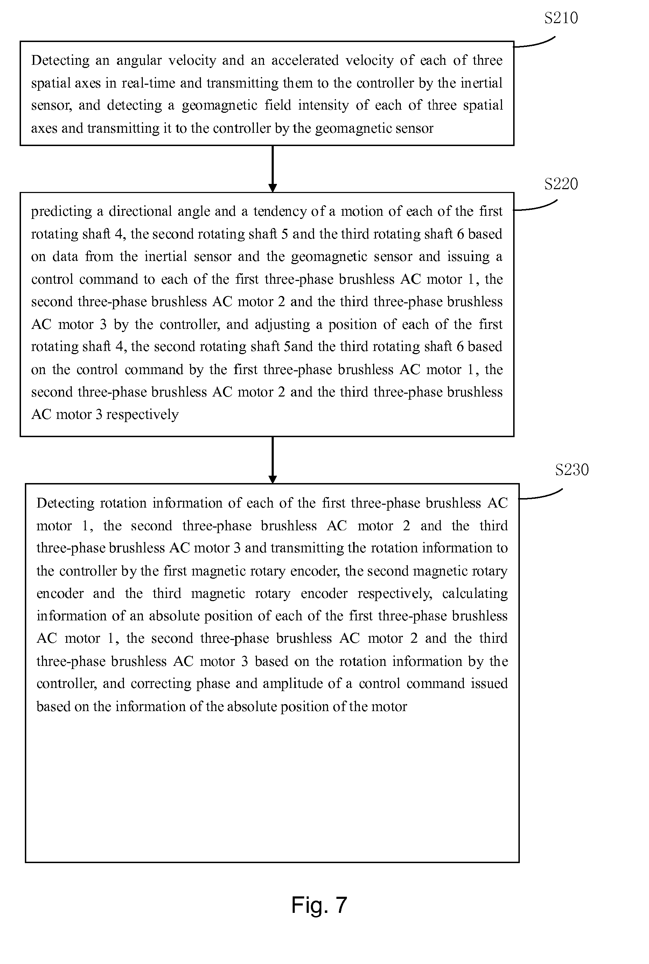

As shown in FIGURE 7, a method for controlling a stabilizer for photographing apparatus includes the following steps:
S210, detecting an angular velocity and an accelerated velocity of each of three spatial axes in real time and transmitting them to the controller by the inertial sensor, and detecting a geomagnetic field intensity of each of three spatial axes and transmitting it to the controller by the geomagnetic sensor;
S220, predicting a directional angle and a tendency of a motion of each of the first rotating shaft 4, the second rotating shaft 5, and the third rotating shaft 6 based on data from the inertial sensor and the geomagnetic sensor, and issuing a control command to each of the first three-phase brushless AC motor 1, the second three-phase brushless AC motor 2, and the third three-phase brushless AC motor 3 by the controller, and adjusting a position of each of the first rotating shaft 4, the second rotating shaft 5 and the third rotating shaft 6 based on the control command by the first three-phase brushless AC motor 1, the second three-phase brushless AC motor 2, and the third three-phase brushless AC motor 3, respectively; and
S230, detecting rotation information of each of the first three-phase brushless AC motor 1, the second three-phase brushless AC motor 2, and the third three-phase brushless AC motor 3 and transmitting the rotation information to the controller by the first magnetic rotary encoder, the second magnetic rotary encoder, and the third magnetic rotary encoder, respectively, calculating information of an absolute position of each of the first three-phase brushless AC motor 1, the second three-phase brushless AC motor 2, and the third three-phase brushless AC motor 3 based on the rotation information, by the controller, and correcting phase and amplitude of a control command issued based on the information of the absolute position of the motor. The information of the absolute position includes the mechanical angle of the motor, the electrical angle of the motor, the phase of the magnetic field, and so on. The control command is a three-phase AC sine wave.

In the embodiment, the method for controlling the three-axis stabilizer for a photographing apparatus as described in Example Four or Five, also has two control loops, one in which the controller predicts the directional angle and the tendency of the motion of each of the first rotating shaft 4, the second rotating shaft 5, and the third rotating shaft 6 based on data from the inertial sensor and the geomagnetic sensor, and issues the control command to each of the first three-phase brushless AC motor 1, the second three-phase brushless AC motor 2, and the third three-phase brushless AC motor 3 to adjust the position of each of the first rotating shaft 4, the second rotating shaft 5, and the third rotating shaft 6, and the other in which the first magnetic rotary encoder, the second magnetic rotary encoder, and the third magnetic rotary encoder detect the rotation information of the first three-phase brushless AC motor 1, the second three-phase brushless AC motor 2, and the third three-phase brushless AC motor 3 and transmit the rotation information to the controller, respectively, the controller calculates the information of the absolute position of each of the first three-phase brushless AC motor 1, the second three-phase brushless AC motor 2, and the third three-phase brushless AC motor 3 based on the rotation information and corrects the phase and amplitude of the control command issued based on the information of the absolute position of the motor, so as to keep the photographing apparatus mounted on the two-axis stabilizer stable, and to have clear and smooth continuous images, without shaking. The information of the absolute position includes the mechanical angle of the motor, the electrical angle of the motor, the phase of the magnetic field, and so on. The control command is a three-phase AC sine wave.

In the above steps, predicting a directional angle and a tendency of a motion of each of the first rotating shaft 4, the second rotating shaft 5, and the third rotating shaft 6 based on data from the inertial sensor and the geomagnetic sensor, and issuing a control command to each of the first three-phase brushless AC motor 1, the second three-phase brushless AC motor 2, and the third three-phase brushless AC motor 3 by the controller includes the following steps:
reading data of the inertial sensor and the geomagnetic sensor in real time and calculating a current attitude of each of the first rotating shaft 4, the second rotating shaft 5, and the third rotating shaft 6 by the controller;
calculating control increments by using the angular velocities of three spatial axes (X, Y, Z three spatial axes with the origin at the inertial sensor) as a feedback quantity (feedback velocity) and using the calculated current attitude angles of the first rotating shaft 4, the second rotating shaft 5, and the third rotating shaft 6 as compensation by the controller; and
adding the control increments to driving targets of the first three-phase brushless AC motor 1, the second three-phase brushless AC motor 2 and the third three-phase brushless AC motor 3, and distributing a pulse-width modulatable continuous pulse at a duty ratio corresponding to a three-phase sine wave to each of the first three-phase brushless AC motor 1, the second three-phase brushless AC motor 2, and the third three-phase brushless AC motor 3 based on the driving targets by the controller. A control output is added to the driving target, where the control output is output data of the control algorithm which is a increment, and the driving target is the current drive phase of the motor which is a absolute quantity, so the control output and the driving target should be summed together.

In various embodiments, the continuous pulse operates at frequencies between 16 KHz/s and 22 KHz/s. The first three-phase brushless AC motor 1, the second three-phase brushless AC motor 2, and the third three-phase brushless AC motor 3 can run smoothly within these frequencies, can directly drive the first rotating shaft 4, the second rotating shaft 5, and the third rotating shaft 6 without any mechanical clearance, and can effectively compensate the photographing apparatus motion in multiple axial directions smoothly and steadily.

In the above steps, detecting rotation information of each of the first three-phase brushless AC motor 1, the second three-phase brushless AC motor 2, and the third three-phase brushless AC motor 3 and transmitting the rotation information to the controller by the first magnetic rotary encoder, the second magnetic rotary encoder, and the third magnetic rotary encoder, respectively, may include the following step:
forming a rotating magnetic field by a rotation of each of the circular magnetic steel sheets with the first three-phase brushless AC motor 1, the second three-phase brushless AC motor 2, and the third three-phase brushless AC motor 3, respectively, detecting the rotating magnetic field and outputting two orthogonal sine wave signals to the controller by the encoder chips, and calculating information of an absolute position of each of the first three-phase brushless AC motor 1, the second three-phase brushless AC motor 2, and the third three-phase brushless AC motor 3 based on data from the encoder chips by the controller.

In the above steps, the controller collects data from the inertial sensor and the magnetic rotary encoders at frequencies between 1,300/s and 1,600/s, by which the first rotating shaft 4, the second rotating shaft 5, and the third rotating shaft 6 can be controlled accurately, so as to keep the photographing apparatus stable.

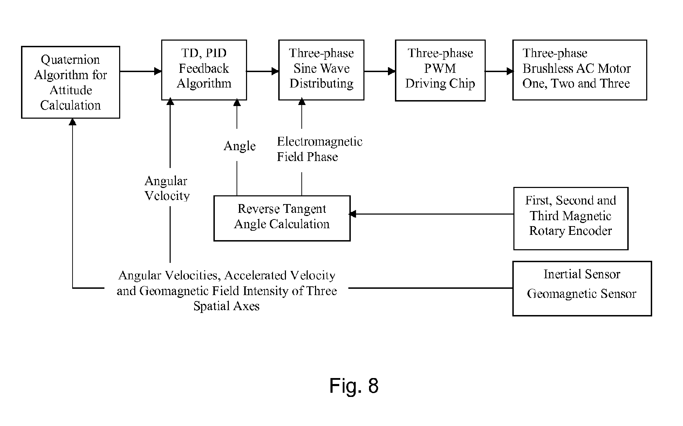

As shown in FIGURE 8, the schematic diagram illustrates a method for controlling a three-axis stabilizer for a photographing apparatus, according to the disclosure. As seen in FIGURE 8, for the first control loop, the controller reads data from the inertial sensor and the geomagnetic sensor in real time and calculates the current attitude of each of the rotating shaft by a quaternion algorithm. The data output from the inertial sensor includes the angular velocity and the accelerated velocity of each of X, Y, Z three spatial axes with the origin at the inertial sensor and the data output from the geomagnetic sensor includes the geomagnetic field intensity of each of X, Y, Z three spatial axes with the origin at the geomagnetic sensor, and calculates control increments by using angular velocities of X, Y, Z three spatial axes with the origin at the inertial sensor as feedback quantity (feedback velocity) and using calculated current attitude angles as compensation by a feedback control algorithm. The feedback control algorithm is based on a known PID control algorithm that obtains high-quality differential signals by a tracking differentiator (TD) and takes an antisaturation process for integral terms to speed up response speed efficiently, improve control precision, and reduce vibration. The controller adds the control increments to driving targets in "three-phase sine wave distributing," distributes phase data corresponding to the three-phase sine wave based on the driving targets, and outputs three-phase driving data to a three-phase brushless AC motor chip in PWM mode that the amplified PWM driving wave form a rotating vector in a winding of the three-phase brushless AC motor and a corresponding torque is output to drive a load such as a photographing apparatus. Meanwhile, for the second control loop, the circular magnetic steel sheets connected with each of the rotating shafts, respectively, with the motor forms a rotating magnetic field. The encoder chips detect the rotating magnetic field and output two orthogonal sine wave signals, and the controller reads data from the magnetic rotary encoders in real time and calculates the angle of the three-phase brushless AC motor and current magnetic field phase, adjusts the phase of the output three-phase sine wave based on the current magnetic field phase, and adjusts the amplitude the output three-phase sine wave, to make the attitude of the photographing apparatus stable. This principle also applies to a two-axis stabilizer, and the difference from a three-axis stabilizer is that there is not a geomagnetic sensor for detecting a geomagnetic field intensity of each of three spatial axes of the method for controlling a two-axis stabilizer.

The embodiments are chosen and described in order to explain the principles of the disclosure and their practical application so as to motivate others skilled in the art to utilize the disclosure and various embodiments and with various modifications as are suited to the particular use contemplated. Alternative embodiments will become apparent to those skilled in the art to which the present disclosure pertains without departing from its spirit and scope. Accordingly, the scope of the present disclosure is defined by the appended claims rather than the foregoing description and the exemplary embodiments described therein.

## Claims

1. A stabilizer for a photographing apparatus, **characterized by** comprising:
a first rotating shaft driven by a first three-phase brushless AC motor;
a second rotating shaft driven by a second three-phase brushless AC motor;
a first magnetic rotary encoder mounted on the first three-phase brushless AC motor;
a second magnetic rotary encoder mounted on the second three-phase brushless AC motor;
an inertial sensor;
a fixing member; and
a controller,
wherein the first three-phase brushless AC motor, the second three-phase brushless AC motor, the inertial sensor, the first magnetic rotary encoder, and the second magnetic rotary encoder are electrically connected to the controller, respectively, the inertial sensor is mounted on the fixing member, the center axis of the first rotating shaft is perpendicular to the center axis of the second rotating shaft, the fixing member is connected to the first rotating shaft, and the first three-phase brushless AC motor is connected to the second rotating shaft by a bending member.

2. The stabilizer for a photographing apparatus of Claim 1, **characterized in that** the fixing member comprises a supporting plate, a first clamping element, and a second clamping element, each of opposite sides of the supporting plate is provided with an engaging mount, each of the first clamping element and the second clamping element is provided with an engaging shaft, the engaging shaft is hitched with a torsion spring, the first clamping element and the second clamping element can be rotatably mounted on the supporting plate by a cooperation between the engaging shaft and the engaging mount, and the supporting plate is connected to the first rotating shaft.

3. The stabilizer for a photographing apparatus of Claim 2, **characterized in that** a holding surface of each of the first clamping element and the second clamping element is an inward concave surface and the holding surfaces of the first clamping element and the second clamping element are symmetrical.

4. The stabilizer for a photographing apparatus of Claim 1, **characterized in that** the fixing member comprises a bearing plate, a connecting plate, and a positioning element, the connecting plate comprises a connection portion and a mounting portion perpendicular to the connection portion, the connection portion is connected to the first rotating shaft by a first leadscrew nut mechanism, the mounting portion is connected to the bearing plate by a second leadscrew nut mechanism, and the positioning element is provided on a side of the bearing plate.

5. The stabilizer for a photographing apparatus of Claim 1, **characterized in that** a display is provided at a side of the second three-phase brushless AC motor remote from the second rotating shaft, configured to be electrically connected to a photographing apparatus.

6. The stabilizer for a photographing apparatus of Claim 1, **characterized in that** each of the first magnetic rotary encoder and the second magnetic rotary encoder comprises a circular magnetic steel sheet and an encoder chip, the circular magnetic steel sheet is mounted on each of the first rotating shaft and the second rotating shaft, and the encoder chip is configured to face the circular magnetic steel sheet, be electrically connected to the controller, and be not abutted against its corresponding circular magnetic steel sheet.

7. The stabilizer for a photographing apparatus of any one of claims 1 to 6, **characterized in that** the stabilizer further comprises a universal handle, the second three-phase brushless AC motor is connected to the universal handle, the controller is provided in the universal handle, the universal handle is provided with a power switch and a rotating shaft adjustment rod, the power switch and the rotating shaft adjustment rod are electrically connected to the controller, respectively.

8. The stabilizer for a photographing apparatus of any one of claims 1 to 6, **characterized in that** the stabilizer further comprises a third rotating shaft driven by a third three-phase brushless AC motor, a connecting rod, an operating handle, a geomagnetic sensor, and a third magnetic rotary encoder, the geomagnetic sensor and the third magnetic rotary encoder are electrically connected to the controller, respectively, the geomagnetic sensor is mounted on the fixing member, the third magnetic rotary encoder is mounted on the third three-phase brushless AC motor, the third three-phase brushless AC motor is connected to the operating handle, the third rotating shaft is connected to the second three-phase brushless AC motor by the connecting rod, and the center axis of the third rotating shaft is perpendicular to the center axes of the first and second rotating shafts, respectively.

9. The stabilizer for a photographing apparatus of Claim 8, **characterized in that** the third magnetic rotary encoder includes a circular magnetic steel sheet and an encoder chip, the circular magnetic steel sheet is mounted on the first rotating shaft, the second rotating shaft, and the third rotating shaft, and the encoder chip is configured to face the circular magnetic steel sheet, be electrically connected to the controller, and be not abutted against its corresponding circular magnetic steel sheet.

10. The stabilizer for a photographing apparatus of Claim 9, **characterized in that** each of the first rotating shaft, the second rotating shaft, and the third rotating shaft is hollow with a collecting ring inside.

11. The stabilizer for a photographing apparatus of Claim 10, **characterized in that** each of the first three-phase brushless AC motor, the second three-phase brushless AC motor, and the third three-phase brushless AC motor is in a form of a flattened columned disc.

12. A control method for the stabilizer for a photographing apparatus of any one of claims 1 to 7, **characterized by** comprising:
detecting an angular velocity and an accelerated velocity of each of three spatial axes in real time and transmitting them to the controller by the inertial sensor;
predicting a tendency of a motion of each of the first rotating shaft and the second rotating shaft based on data from the inertial sensor and issuing a control command to each of the first three-phase brushless AC motor and the second three-phase brushless AC motor to adjust a position of each of the first rotating shaft and the second rotating shaft by the controller; and
detecting rotation information of each of the first three-phase brushless AC motor and the second three-phase brushless AC motor and transmitting the rotation information to the controller by the first magnetic rotary encoder and the second magnetic rotary encoder, respectively, calculating information of an absolute position of each of the first three-phase brushless AC motor and the second three-phase brushless AC motor based on the rotation information, by the controller, and correcting phase and amplitude of a control command issued based on the information of the absolute position of the motor.

13. A control method of the stabilizer for a photographing apparatus of any one of claims 8 to 11, **characterized by** comprising:
detecting an angular velocity and an accelerated velocity of each of three spatial axes in real time and transmitting them to the controller by the inertial sensor, and detecting a geomagnetic field intensity of each of three spatial axes and transmitting it to the controller by the geomagnetic sensor;
predicting a directional angle and a tendency of a motion of each of the first rotating shaft, the second rotating shaft, and the third rotating shaft based on data from the inertial sensor and the geomagnetic sensor and issuing a control command to each of the first three-phase brushless AC motor, the second three-phase brushless AC motor, and the third three-phase brushless AC motor by the controller, and adjusting a position of each of the first rotating shaft, the second rotating shaft, and the third rotating shaft based on the control command by the first three-phase brushless AC motor, the second three-phase brushless AC motor, and the third three-phase brushless AC motor, respectively; and
detecting rotation information of each of the first three-phase brushless AC motor, the second three-phase brushless AC motor, and the third three-phase brushless AC motor and transmitting the rotation information to the controller by the first magnetic rotary encoder, the second magnetic rotary encoder, and the third magnetic rotary encoder, respectively, calculating information of an absolute position of each of the first three-phase brushless AC motor, the second three-phase brushless AC motor, and the third three-phase brushless AC motor based on the rotation information, by the controller, and correcting phase and amplitude of a control command issued based on the information of the absolute position of the motor.

14. The method of Claim 13, **characterized in that** predicting a directional angle and a tendency of a motion of each of the first rotating shaft, the second rotating shaft, and the third rotating shaft based on data from the inertial sensor and the geomagnetic sensor and issuing a control command to each of the first three-phase brushless AC motor, the second three-phase brushless AC motor, and the third three-phase brushless AC motor by the controller, comprises:
reading data of the inertial sensor and the geomagnetic sensor in real time and calculating a current attitude of each of the first rotating shaft, the second rotating shaft, and the third rotating shaft by the controller;
calculating control increments by using the angular velocities of three spatial axes as feedback quantity and using the calculated current attitude angles of the first rotating shaft, the second rotating shaft, and the third rotating shaft as compensation by the controller; and
adding the control increments to driving targets of the first three-phase brushless AC motor, the second three-phase brushless AC motor, and the third three-phase brushless AC motor and distributing a pulse-width modulatable continuous pulse at a duty ratio corresponding to a three-phase sine wave to each of the first three-phase brushless AC motor, the second three-phase brushless AC motor, and the third three-phase brushless AC motor based on the driving targets by the controller.

15. The method of Claim 14, **characterized in that** the continuous pulse operates at frequencies between 16 KHz/s and 22 KHz/s.

16. The method of Claim 15, **characterized in that** detecting rotation information of each of the first three-phase brushless AC motor, the second three-phase brushless AC motor, and the third three-phase brushless AC motor and transmitting the rotation information to the controller by the first magnetic rotary encoder, the second magnetic rotary encoder, and the third magnetic rotary encoder, respectively, comprises:
forming a rotating magnetic field by a rotation of each of the circular magnetic steel sheets with the first three-phase brushless AC motor, the second three-phase brushless AC motor, and the third three-phase brushless AC motor, respectively, detecting the rotating magnetic field and outputting two orthogonal sine wave signals to the controller by the encoder chips, and calculating information of an absolute position of each of the first three-phase brushless AC motor, the second three-phase brushless AC motor, and the third three-phase brushless AC motor based on data from the encoder chips by the controller.

17. The method of Claim 16, **characterized in that** the controller collects data from the inertial sensor and the magnetic rotary encoders at frequencies between 1,300/s and 1,600/s in the above steps.
